# EUROPEAN PATENT SPECIFICATION

(11) **EP 3 936 567 B1**
(45) Date of publication and mention of the grant of the patent: **18.09.2024**
(21) Application number: 20766373.3
(22) Date of filing: 06.03.2020
(51) Int. Cl.: C08L 53/02, C08L 23/10

(54) **ELASTOMER RESIN COMPOSITION, ADHESIVE FILM AND METHOD FOR PRODUCING SAME, FILM AND MOLDED BODY**
ELASTOMERHARZZUSAMMENSETZUNG, KLEBEFOLIE UND VERFAHREN ZUR HERSTELLUNG DAVON, FOLIE UND FORMKÖRPER
COMPOSITION DE RÉSINE ÉLASTOMÈRE, FILM ADHÉSIF ET SON PROCÉDÉ DE PRODUCTION, FILM ET CORPS MOULÉ

(30) Priority: 07.03.2019 JP 2019041704
(43) Date of publication of application: 12.01.2022
(73) Proprietor: Kuraray Co., Ltd., Kurashiki-shi, Okayama 710-0801 (JP)
(72) Inventor: AKIHO, Satoru, Tsukuba-shi, Ibaraki 305-0841 (JP); ENOMOTO, Keisuke, Tsukuba-shi, Ibaraki 305-0841 (JP); IISHIBA, Kazuki, Tsukuba-shi, Ibaraki 305-0841 (JP); KONISHI, Daisuke, Kamisu-shi, Ibaraki 314-0197 (JP)
(74) Representative: Müller-Boré & Partner Patentanwälte PartG mbB
(86) International application number: PCT/JP2020/009804
(87) International publication number: WO 2020/179923

(56) References cited:
- WO-A1-2013/105392
- JP-A- 2005 068 222
- JP-A- 2018 002 891
- JP-A- 2018 016 698
- JP-A- 2018 059 015
- JP-A- 2018 154 682
- JP-A- 2018 154 707
- US-A1- 2017 198 127

## Description

### Technical Field

The present invention relates to an elastomer resin composition, a pressure-sensitive adhesive film and a method for producing it, a film, and a molded article.

### Background Art

Members of ceramics, metals, synthetic resins and others excellent in durability, heat resistance and mechanical strength are widely used in various uses for home electric appliances, electronic parts, machine parts, automobile parts, etc. In uses for exterior surfacing and wall-covering of home electric appliances and for interior decorating of automobiles, a decorative film is adhered to such members in many cases for the purpose of decoration with wood-grain and the like pictorial patterns, impartation of metallic or piano-black design, and impartation of functionality such as scratch resistance and weather resistance. As a decorative film, in general, a (meth)acrylic resin, a polycarbonate resin, a polypropylene resin, a polyester resin, an ABS resin or the like is used, and as an adherend, a polypropylene resin, an ABS resin or the like is used.

However, especially in the case where materials of a decorative film and an adherend differ from polarity, there is a problem that the decorative film could not adhere to the adherend. In such a case, an adhesive needs to be applied separately for the purpose of adhering the film to the adherend. This operation needs a coating step with a solvent, a drying step and a curing step, adhesive application requires a long time, VOC may have a risk of worsening working environments, and coating unevenness causes poor adhesion. Therefore, a pressure-sensitive adhesive film capable of adhering to both a polar material and an apolar material not needing an adhesive is desired.

For solving the problem, PTL 1 discloses a film-formable, thermoplastic polymer resin composition.

PTL 2 discloses a multilayer film produced through coextrusion of a substrate layer and an adhesive layer. PTL 3 discloses a multilayer film produced by forming an adhesive layer on a substrate layer by coating.

### Citation List

### Patent Literature

PTL 1: JP 5998154 B
PTL 2: JP 2018-16698 A
PTL 3: JP 2018-2891 A

JP2018154682A discloses a thermoplastic elastomer composition containing hydrogenated conjugated diene-styrene block copolymer , hydrocarbon-based rubber softener and polypropylene.

### Summary of Invention

### Technical Problem

However, the resin composition described in PTL 1 has some problems in that, when the resin composition molded by film-like extrusion, not only the molding product thereof is broken while passing through the apparatus but also the resin composition undergoes server neck-in as the melt tension thereof is poor, and therefore the molded product thereof is poor in producibility and brings about cost increase.

The multilayer film produced through coextrusion in PTL 2 is expensive since the line speed thereof is slow. The multilayer film described in PTL 3 also has some problems in that it requires a step of producing a substrate in an additional step, a coating step, a drying step, and a curing step, and therefore takes a long time for the steps, and in addition, the working environment is worsened by VOC and the necessary energy is large to also worsen the environment.

In consideration of the above-mentioned problems of the prior art, an object of the present invention is to provide an elastomer resin composition excellent in extrudability and having good adhesiveness to polar materials and apolar materials, a method for producing a pressure-sensitive adhesive film using the elastomer resin composition, a film having the pressure-sensitive adhesive film, and a molded article having the film.

### Solution to Problem

For solving the above-mentioned problems, the present inventors have made assiduous studies and, as a result, have found out an elastomer resin composition capable of suppressing neck-in during extrusion molding without detracting from adhesiveness, by adding an appropriate amount of a polypropylene polymer having a characteristic of an elongation viscosity ratio of 5.0 or more to a thermoplastic elastomer, and have completed the present invention. The present invention is defined in the appended set of claims.

### Advantageous Effects of Invention

Using the elastomer resin composition of the present invention, a pressure-sensitive adhesive film hardly undergoing neck-in during extrusion molding can be obtained. Such a pressure-sensitive adhesive film can provide a molded article capable of well adhering to various adherends irrespective of a polar or apolar material.

### Description of Embodiments

### [Elastomer Resin Composition]

The elastomer resin composition of the present invention is a resin composition containing a thermoplastic elastomer (A), which is a block copolymer having a polymer block (a1) containing a structural unit derived from an aromatic vinyl compound and a polymer block (a2) containing a structural unit derived from a conjugated diene compound, or a hydrogenate of the block copolymer, and a polypropylene polymer (B), which has the elongation viscosity ratio η2.5/η1.0 being 5.0 or more, where each of η1.0, and η2.5 represents the elongation viscosity at a strain of 1.0 and 2.5, respectively, measured in uniaxial elongation viscosity measurement under the condition of a strain rate of 1.0 sec⁻¹ and a measurement temperature of 180°C, wherein the amount of the polypropylene polymer (B) is 5 to 15 parts by mass relative to 100 parts by mass of the thermoplastic elastomer (A).

The elastomer resin composition may further contain a polar group-containing polypropylene polymer as a polypropylene polymer (C). The resins are described below.

### <Thermoplastic Elastomer (A)>

The thermoplastic elastomer (A) that the elastomer composition of the present invention contains is a block copolymer having a polymer block (a1) that contains a structural unit derived from an aromatic vinyl compound and a polymer block (a2) that contains a structural unit derived from a conjugated diene compound, or a hydrogenate the block copolymer. The thermoplastic elastomer (A) imparts flexibility and good mechanical properties and moldability to the elastomer resin composition, and acts as a matrix in the composition.

### - Polymer block (a1) containing a structural unit derived from an aromatic vinyl compound -

Examples of the aromatic vinyl compound constituting the polymer block (A) include those containing a structural unit derived from styrene, α-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, 1-vinylnaphthalene, and 2-vinylnaphthalene. The polymer block composed of an aromatic vinyl compound may be composed of a structural unit derived from one kind alone of these aromatic vinyl compounds, or may be composed of structural units derived from two or more kinds of the compounds. Above all, styrene, α-methylstyrene, and 4-methylstyrene are preferred.

The polymer block (a1) containing a structural unit derived from an aromatic vinyl compound is preferably a polymer block containing 80% by mass or more of a structural unit derived from an aromatic vinyl compound, more preferably 90% by mass or more of the structural unit, even more preferably 95% by mass or more of the structural unit. The polymer block (a1) may have a structural unit derived from an aromatic vinyl compound alone, or may have, along with the structural unit, a structural unit derived from any other copolymerizable monomer, not detracting from the advantageous effects of the present invention. Examples of the other copolymerizable monomer include 1-butene, pentene, hexene, butadiene, isoprene, and methyl vinyl ether. In the case where the polymer block has a structural unit derived from such other copolymerizable monomer, the proportion thereof is preferably 20% by mass or less relative to the total amount of the structural unit derived from an aromatic vinyl compound and the structural unit derived from the other copolymerizable monomer, more preferably 10% by mass or less, even more preferably 5% by mass or less.

### - Polymer block (a2) containing a structural unit derived from a conjugated diene compound -

Examples of the structural unit derived from a conjugated diene compound that constitutes the polymer block (a2) include those derived from butadiene, isoprene, 2,3-dimethyl-1,3-butadiene, 1,3-pentadiene, and 1,3-hexadiene. Above all, butadiene or isoprene is preferred.

The polymer block (a2) that contains a structural unit derived form a conjugated diene compound may be composed of a structural unit derived from one kind alone of these conjugated diene compounds, or may be composed of two or more kinds of such structural units. In particular, the polymer block is preferably composed of a structural unit derived from butadiene or isoprene, or structural unit derived from butadiene and isoprene.

The polymer block (a2) containing a structural unit derived from a conjugated diene compound is preferably a polymer block containing 80% by mass or more of a structural unit derived from a conjugated diene compound, more preferably 90% by mass or more of the structural unit, even more preferably 95% by mass or more of the structural unit. The polymer block (a2) may have a structural unit derived from a conjugated diene compound alone, or may have, along with the structural unit, a structural unit derived from any other copolymerizable monomer, not detracting from the advantageous effects of the present invention. Examples of the other copolymerizable monomer include styrene, α-methylstyrene, and 4-methylstyrene. In the case where the polymer block has a structural unit derived from such other copolymerizable monomer, the proportion thereof is preferably 20% by mass or less relative to the total amount of the structural unit derived from a conjugated diene compound and the structural unit derived from the other copolymerizable monomer, more preferably 10% by mass or less, even more preferably 5% by mass or less.

The bonding mode of the conjugated diene to constitute the polymer block (a2) that contains a structural unit derived from a conjugated diene compound is not specifically limited. For example, a case of butadiene may have a 1,2-bond or a 1,4-bond, and a case of isoprene may have a 1,2-bond, a 3,4-bond or a 1,4-bond. Among these, in the case where the polymer block (a2) containing a structural unit derived from a conjugated diene compound contains a structural unit derived from butadiene, or contains a structural unit derived from isoprene, or contains structural units derived from both butadiene and isoprene, the total of the 1,2-bond amount and the 3,4-bond amount in the polymer block (a2) is, from the viewpoint of expressing high adhesion performance and suppressing neck-in to be mentioned below, preferably 40 mol% or more. The proportion of the total of the 1,2-bond amount and the 3,4-bond amount relative to the total bond amount in the polymer block (a2) is preferably 40 to 90 mol%, more preferably 50 to 80 mol%, even more preferably 55 to 80 mol%.

The total amount of the 1,2-bond amount and the 3,4-bond amount can be calculated through ¹H-NMR measurement. Specifically, it can be calculated from a ratio of the integral value of the peaks existing in a range of 4.2 to 5.0 ppm derived from the structural unit in a 1,2-bond and a 3,4-bond, to the integral value of the peaks existing in a range of 5.0 to 5.45 ppm derived from the structural unit in a 1,4-bond.

In the thermoplastic elastomer (A), the bonding mode of the polymer block (a1) containing a structural unit derived from an aromatic vinyl compound and the polymer block (a2) containing a structural unit derived from a conjugated diene compound is not specifically limited, and may be any of a linear, branched or radical bonding mode or a combination of two or more of these, but is preferably a linear bonding mode.

Examples of the linear bonding mode include, when the polymer block (a1) containing a structural unit derived from an aromatic vinyl compound is represented by a and the polymer block (a2) containing a structural unit derived from a conjugated diene compound is represented by b, a diblock copolymer represented by a-b, a triblock copolymer represented by a-b-a or b-a-b, a tetrablock copolymer represented by a-b-a-b, a pentablock copolymer represented by a-b-a-b-a or b-a-b-a-b, and an (a-b)nX-type copolymer (where X represents a coupling residue and n represents an integer of 2 or more), and a mixture thereof. Among these, a triblock copolymer is preferred, and a triblock copolymer represented by a-b-a is more preferred.

The content of the polymer block (a1) containing a structural unit derived from an aromatic vinyl compound in the thermoplastic elastomer (A) is, from the viewpoint of flexibility and mechanical properties, preferably 5 to 75% by mass relative to the entire thermoplastic elastomer (A), more preferably 5 to 60% by mass, even more preferably 10 to 40% by mass.

The content of the polymer block (a2) containing a structural unit derived from a conjugated diene compound in the thermoplastic elastomer (A) is, from the viewpoint of flexibility and mechanical properties, preferably 25 to 95% by mass relative to the entire thermoplastic elastomer (A), more preferably 40 to 95% by mass, even more preferably 60 to 90% by mass.

The total content of the polymer block (a1) and the polymer block (a2) in the thermoplastic elastomer (A) is 97% by mass or more, more preferably 99% by mass or more, even more preferably 100% by mass.

The weight-average molecular weight of the thermoplastic elastomer (A) is, from the viewpoint of mechanical properties and moldability, preferably 30,000 to 500,000, more preferably 50,000 to 400,000, even more preferably 60,000 to 200,000, further more preferably 70,000 to 200,000, especially more preferably 70,000 to 190,000, most preferably 80,000 to 180,000. Here, the weight-average molecular weight is a polystyrene-equivalent weight-average molecular weight determined through gel permeation chromatography (GPC) measurement.

One alone or two or more kinds of thermoplastic elastomers (A) can be used either singly or as combined.

A production method for the thermoplastic elastomer (A) is not specifically limited, and for example, the elastomer can be produced according to an anion polymerization method. Specifically, the production method includes (i) a method of sequentially polymerizing the above-mentioned aromatic vinyl compound, the above-mentioned conjugated diene compound and then the above-mentioned aromatic vinyl compound, using an alkyl lithium compound as an initiator; (ii) a method of sequentially polymerizing the above-mentioned aromatic vinyl compound and the above-mentioned diene compound using an alkyl lithium compound as an initiator, followed by coupling with a coupling agent added; and (iii) a method of sequentially polymerizing the above-mentioned conjugated diene compound and then the above-mentioned aromatic vinyl compound using a dilithium compound as an initiator.

In the anion polymerization, an organic Lewis base may be added to increase the 1,2-bond amount and the 3,4-bond amount in the polymer block (a2) in the thermoplastic elastomer (A), and depending on the amount of the organic Lewis base added, the 1,2-bond amount and the 3,4-bond amount can be readily controlled.

Examples of the organic Lewis base include esters such as ethyl acetate; amines such as triethylamine, N,N,N',N'-tetramethylenediamine (TMEDA), and N-morpholine; nitrogen-containing heterocyclic aromatic compounds such as pyridine; amides such as dimethylacetamide; ethers such as dimethyl ether, diethyl ether, tetrahydrofuran (THF), and dioxane; glycol ethers such as ethylene glycol dimethyl ether, and diethylene glycol dimethyl ether; sulfoxides such as dimethyl sulfoxide; and ketones such as acetone, and methyl ethyl ketone.

The thermoplastic elastomer (A) is, from the viewpoint of improving heat resistance and weather resistance, preferably such that a part or all of the polymer block (a2) containing a conjugated diene compound therein is hydrogenated. In that case, the hydrogenation ratio of the conjugated diene compound-containing polymer block is preferably 80% or more, more preferably 90% or more. Here, in the present description, the hydrogenation ratio is a value obtained by measurement of the iodine value of the block copolymer before and after hydrogenation reaction.

The hydrogenated thermoplastic elastomer (A) can be produced by hydrogenating an unhydrogenated thermoplastic elastomer (A). The hydrogenation reaction can be attained by dissolving the unhydrogenated thermoplastic elastomer (A) obtained in the manner as mentioned above, in a solvent inert to the reaction and the hydrogenation catalyst, and reacting it with hydrogen, or without isolating the unhydrogenated thermoplastic elastomer (A) from the reaction liquid, directly reacting it with hydrogen in the presence of a hydrogenation catalyst.

As the thermoplastic elastomer (A), commercial products can also be used.

Insofar as the gist of the present invention is not impaired, the thermoplastic elastomer (A) may optionally have, as the case may be, one or more kinds of functional groups such as a carboxy group, a hydroxy group, an acid anhydride group, an amino group and an epoxy group, in the molecular chain and/or in the molecular terminal.

The content of the thermoplastic elastomer (A) in the elastomer resin composition of the present invention is preferably 50% by mass or more, more preferably 70% by mass or more, even more preferably 80% by mass or more, further more preferably 85% by mass or more, and is preferably 95.2% by mass or less, more preferably 95.1% by mass or less, even more preferably 95.0% by mass or less, further more preferably 94.5% by mass or less, further more preferably 94.0% by mass or less. Within the range, the advantageous effects of the present invention can be more readily attained.

### <Polypropylene Polymer (B)>

The polypropylene resin (B) for use in the present invention has the elongation viscosity ratio being η2.5/η1.0 is 5.0 or more, where each of η1.0, and η2.5 represents the elongation viscosity at a strain of 1.0 and 2.5, respectively, measured in uniaxial elongation viscosity measurement under the condition of a strain rate of 1.0 sec⁻¹ and a measurement temperature of 180°C. The elongation viscosity ratio η2.5/η1.0 is preferably 5.2 or more, more preferably 5.7 or more, and may be 20 or less, or may be 15 or less, or may be 10 or less. Within the range, the neck-in ratio can be suppressed.

When MFR (230°C, 21.18 N, according to JIS K7210) of the polypropylene polymer (B) is smaller, the elongation viscosity ratio η2.5/η1.0 thereof tends to be larger, and from the viewpoint of the flexibility, the metering stability and the elongation viscosity ratio of the resultant film, MFR of the polypropylene polymer (B) is preferably 0.1 to 100 g/10 min, more preferably 0.1 to 30 g/10 min, even more preferably 0.1 to 10 g/10 min.

When the elongation viscosity ratio of the polypropylene polymer (B) is less than 5.0, it may be difficult to achieve both suppression of neck-in and adhesiveness.

Examples of the polypropylene polymer having the properties as above include those having a crosslinked structure, a long-chain branched structure or a high-molecular component. Among these, in particular, from the viewpoint of maintaining flexibility of film, a polypropylene polymer having a long-chain branched structure is preferred. The method for introducing a long-chain branched structure includes a method of grafting polypropylene with a radical-polymerizable monomer (Macromolecules 26 (1993) 3467), a method of copolymerizing a propylene and a polyene (JP 5-194778 A), a macromer copolymerization method using a metallocene catalyst (JP 2009-057542 A), and a method of melt-mixing a polypropylene and a conjugated diene compound along with a radical polymerization initiation (JP 2015-098542 A). Among these, especially preferred is a polypropylene copolymer produced according to a macromer copolymerization method using a metallocene catalyst for evading a risk of gelation.

The elastomer resin composition of the present invention may contain one kind alone of a polypropylene polymer as the component (B), or may contain two or more kinds of polypropylene polymers differing in point of MFR, elongation viscosity ratio or molecular structure. The polypropylene polymer of the component (B) may be the same copolymer as the polypropylene polymer (C) to be mentioned hereinunder.

The melting point of the polypropylene polymer (B) is, from the viewpoint of heat resistance, preferably 100°C or higher, more preferably 100 to 170°C, even more preferably 110 to 160°C.

### <Principle of Neck-in Suppression>

The principle pf neck-in suppression in extrusion molding is presumed to be such that, in an elongated part of the resin that has been extruded out through a die to have an enlarged strain amount, the elongation viscosity increases owing to the effect of molecular entanglement, and therefore the part would be no more elongated. Containing the polypropylene polymer (B) having the structure as above, the present invention realized the above-mentioned advantageous effects.

At that time, the molecular entanglement is influenced by the compatibility between the polypropylene polymer and the matrix resin, the amount of the branches of the polypropylene polymer, the length of the branch chain thereof, and the length of the main chain thereof. Further, it has been found that the elongation viscosity is also influenced by the total of the 1,2-bond amount and the 3,4-bond amount in the polymer block (a2) in the thermoplastic elastomer (A). This is considered to be because the compatibility with the polypropylene polymer (B) may by increased by the 1,2-bond and the 3,4-bond.

Also neck-in is influenced by air gap, line speed and lip opening. Specifically, when an air gap is longer, or when a line speed is larger, or when a lip opening is smaller, neck-in occurs more readily, and therefore in the case of using a molding machine limited by these factors, neck-in suppression is especially effective.

### < Adhesion Principle with Polar Material >

As described in WO2017/200014, it is considered that in the adhesive interface between the elastomer resin composition of the present invention and a polar material, the polymer block (a1) containing a structural unit derived from the aromatic vinyl compound that constitutes the thermoplastic elastomer (A) may form a phase of a film structure. It is considered that, in the case of the elastomer resin composition of the present invention, the content of the polypropylene polymer (B) can be appropriately controlled and therefore the film structure phase is not inhibited from being formed and adhesiveness can be thereby secured.

The content of the polypropylene polymer (B) is not specifically limited so far at it is 5 to 15 parts by mass relative to 100 parts by mass of the thermoplastic elastomer (A), but is, from the viewpoint of satisfying both excellent adhesiveness and low tackiness, preferably 5.2 to 14.5 parts by mass, more preferably 5.4 to 14.0 parts by mass, even more preferably 5.5 to 13.5 parts by mass.

When the content of the polypropylene polymer (B) relative to 100 parts by mass of the thermoplastic elastomer (A) is less than 5 parts by mass, extrudability may be poor, but on the other hand, when the content is more than 15 parts by mass, adhesiveness to a polar material and an apolar material may be poor.

### <Polypropylene Polymer (C)>

When containing a polypropylene polymer (C), the moldability of the elastomer resin composition can be improved more. In addition, the mechanical properties of the resultant film may also improve and the handleability thereof improves. Further, the polypropylene polymer (C) imparts adhesiveness to adherends, the elastomer resin composition can favorably adhere to adherends by heating treatment.

The polypropylene polymer (C) is a polypropylene polymer differing from the above-mentioned polypropylene polymer (B), and includes a propylene homopolymer and a copolymer of a propylene and an α-olefin having 2 to 8 carbon atoms. In the case of the copolymer of a propylene and an α-olefin having 2 to 8 carbon atoms, the α-olefin in the copolymer includes ethylene, butene-1, isobutene, pentene-1, hexene-1, 4-methylpentene-1 and octene-1. Examples of the polypropylene polymer (C) includes a homopolypropylene, a propylene-ethylene random copolymer, a propylene-ethylene block copolymer, a propylene-butene random copolymer, a propylene-ethylene-butene random copolymer, a propylene-pentene random copolymer, a propylene-hexene random copolymer, a propylene-octene random copolymer, a propylene-ethylene-pentene random copolymer, and a propylene-ethylene-hexene random copolymer. The proportion of the structural unit derived from the α-olefin except propylene in all the structural units that the polypropylene polymer (C) has is, from the viewpoint of the affinity for the thermoplastic elastomer (A), preferably within a range of 0 to 45 mol%, more preferably 0 to 35 mol%, even more preferably 0 to 25 mol%. In other words, the content of the propylene-derived structural unit in the polypropylene polymer (C) is preferably 55 mol% or more, more preferably 65 mol% or more, even more preferably 75 mol% or more.

One kind alone or two or more kinds of polypropylene polymers (C) may be used either singly or as combined.

The polypropylene polymer (C) can be synthesized according to a conventionally-known method, and for example, using a Ziegler-Natta catalyst or a metallocene catalyst, a propylene homopolymer, or a random or block copolymer of a propylene and an α-olefin can be synthesized. Commercial products can also be used as the polypropylene polymer (C).

Not specifically limited, the content of the polypropylene polymer (C) is preferably 0 to 20 parts by mass relative to 100 parts by mass of the total of the thermoplastic elastomer (A) and the polypropylene polymer (B), more preferably more than 0 and 20 parts by mass or less, even more preferably 3 to 20 parts by mass, further more preferably 3 to 18 parts by mass.

### - Polar group-containing polypropylene polymer -

A part or all of the polypropylene polymer (C) may be a polar group-containing polypropylene polymer. Containing a polar group-containing polypropylene polymer, the elastomer resin composition can well adhere to ceramics, metals and synthetic resin.

Examples of the polar group include a (meth)acryloyloxy group; a hydroxy group; an amide group; a halogen atom such as a chlorine atom; a carboxy group; and an acid anhydride group. A method for producing the polar group-containing polypropylene polymer is not specifically limited, and may be any known method (e.g., random copolymerization, block copolymerization, graft copolymerization) using, for example, a propylene and a polar group-containing copolymerizable monomer. Among these, random copolymerization and graft copolymerization are preferred, and graft copolymerization is more preferred.

Apart from the above, the polar group-containing polypropylene polymer can also be obtained by oxidizing or chlorinating a polypropylene polymer in a known method.

The polar group-containing polypropylene polymer may also be one produced by copolymerizing any other α-olefin than propylene with a polar group-containing copolymerizable monomer, along with propylene. The α-olefin includes ethylene, 1-butene, 1-pentene, 1-hexene, 1-octene, 4-methyl-1-pentene, and cyclohexene. The α-olefin can be copolymerized with a polar group-containing copolymerizable monomer according to a known method. Examples of the known method include random copolymerization, block copolymerization and graft copolymerization. The proportion of the structural unit derived from the other α-olefin than propylene, relative to all the structural units that the polar group-containing polypropylene polymer has, is preferably 0 to 45 mol%, more preferably 0 to 35 mol%, even more preferably 0 to 25 mol%.

Examples of the polar group-containing copolymerizable monomer include vinyl acetate, vinyl chloride, ethylene oxide, propylene oxide, acrylamide, and an unsaturated carboxylic acid or an ester or anhydride thereof. Among these, an unsaturated carboxylic acid or an ester or anhydride thereof is preferred. Examples of the unsaturated carboxylic acid or an ester or anhydride thereof include (meth)acrylic acid, (meth)acrylates, maleic acid, maleic anhydride, fumaric acid, itaconic acid, itaconic anhydride, himic acid, and himic anhydride. Among these, maleic acid and maleic anhydride are more preferred. One alone or two or more kinds of these polar group-containing copolymerizable monomers can be used either singly or as combined.

The polar group-containing polypropylene polymer is, from the viewpoint of adhesiveness, preferably a polypropylene having a carboxy group as a polar group, that is, a carboxylic acid-modified polypropylene polymer, and is more preferably a maleic acid-modified polypropylene polymer or a maleic anhydride-modified polypropylene polymer.

The polar group that the polar group-containing polypropylene polymer has may be post-treated after polymerization. For example, the (meth)acrylic acid group or the carboxy group in the polymer may be neutralized with a metal ion to give an ionomer, or may be esterified with methanol or ethanol. Also the vinyl acetate moiety may be hydrolyzed.

MFR (230°C, 21.18 N, according to JIS K7210) of the polypropylene polymer (C) under the condition of 230°C and 21.18 N is preferably 0.1 to 300 g/10 min, more preferably 0.1 to 100 g/10 min, even more preferably 0.1 to 70 g/10 min, further more preferably 0.1 to 50 g/10 min, further more preferably 1 to 30 g/10 min, further more preferably 1 to 20 g/10 min, especially more preferably 1 to 15 g/10 min. The polypropylene polymer (C) whose MFR under the above-mentioned condition is 0.1 g/10 min or more can provide good moldability. On the other hand, the polymer having the MFR of 300 g/10 min or less enables expression of mechanical properties with ease.

The melting point of the polypropylene polymer (C) is, from the viewpoint of heat resistance, preferably 100°C or higher, more preferably 100 to 170°C, even more preferably 110 to 145°C.

### <Other Components>

The elastomer resin composition of the present invention may contain, as needed, a tackifying resin, a softener, an antioxidant, a lubricant, a light stabilizer, a processing aid, a colorant such as pigment and dye, a flame retardant, an antistatic acid, a delustrant, a silicone oil, a blocking inhibitor, a UV absorbent, a release agent, a foaming agent, an antibacterial agent, an antifungal agent and a fragrance, within a range not detracting from the advantageous effects of the invention.

Examples of the tackifying resin include an aliphatic unsaturated hydrocarbon resin, an aliphatic saturated hydrocarbon resin, an alicyclic unsaturated hydrocarbon resin, an alicyclic saturated hydrocarbon resin, an aromatic hydrocarbon resin, a hydrogenated aromatic hydrocarbon resin, a rosin ester resin, a hydrogenated rosin ester resin, a terpene-phenol resin, a hydrogenated terpene-phenol resin, a terpene resin, a hydrogenated terpene resin, an aromatic hydrocarbon-modified terpene resin, a coumaron-indene resin, a phenol resin, and a xylene resin.

The softener is, for example, a softener generally usable for rubbers and plastics. Examples thereof include a paraffinic, napthenic or aromatic process oil; a phthalic acid derivative such as dioctyl phthalate and dibutyl phthalate; a white oil; a mineral oil; an oligomer of ethylene and an α-olefin; a paraffin wax; a liquid paraffin; a polybutene; a low-molecular-weight polybutadiene; and a low-molecular-weight polyisoprene.

Examples of the antioxidant include a hindered phenol-based, phosphorus-based, lactone-based or hydroxy-based antioxidant. Among these, a hindered phenol-based antioxidant is preferred.

### <Production Method for Elastomer Resin Composition>

A method for producing the elastomer resin composition of the present invention is not specifically limited, and for example, a method of melt-kneading the constituent components is recommended for increasing the dispersibility of the components constituting the elastomer resin composition. In that case, a thermoplastic elastomer (A) and a long-chain branched polypropylene polymer (B) and other optional components may be melt-kneaded all at a time. The mixing operation may be carried out using a known mixing or kneading apparatus such as a kneader-ruder, an extruder, a mixing roll, and a Banbury mixer. In particular, from the viewpoint of improving the kneadability and the compatibility of the thermoplastic elastomer (A) and the polypropylene resin (B), a double-screw extruder is preferably used. Preferably, the temperature in mixing and kneading is appropriately controlled depending on the melting temperature of the thermoplastic elastomer (A) and the polypropylene polymer (B) to be used, and generally the components may be mixed at a temperature falling within a range of 110°C to 300°C.

In that manner, the elastomer resin composition of the present invention can be obtained in any desired form of pellets or powder. The resultant elastomer resin composition can be molded into various shapes of films, sheets, plates, pipes, tubes, rods and granules. A method for producing these is not specifically limited, and the composition can be molded in various conventional molding methods of, for example, injection molding, blow molding, pressing, extrusion molding, and calender molding.

### [Pressure-Sensitive Adhesive Film and Production Method for it]

The pressure-sensitive adhesive film of the present invention has a layer of the elastomer resin composition of the present invention.

A method for forming a film of the elastomer resin composition as a method for forming a layer of the elastomer resin composition of the present invention is not specifically limited, but an extrusion lamination method is preferred from the viewpoint of production cost and surface smoothness. Extrusion lamination as extrusion molding is a method of continuously applying a resin melt extruded out through a T-die, onto the surface of a previously-prepared substrate, and compressing them, and this is a molding method of attaining coating and adhesion both at a time. At that time, for securing moldability, a method of sandwiching the elastomer resin composition of the present invention between substrate films is recommended. At least one substrate film in that case is preferably releasable.

The substrate includes films or sheets of a thermoplastic resin, for example, a polyester resin such as polyethylene terephthalate and polybutylene terephthalate, a saponified ethylene-vinyl acetate copolymer, a polyvinyl chloride, a polyvinylidene chloride, a polyethylene, a polypropylene, a poly-4-methyl-1-pentene, a polycarbonate resin, and a polyamide resin such as polyamide 6, polyamide 66 and polyamide 12, as well as paper, metal foils of aluminum or iron.

Films or sheets of such a thermoplastic resin may be monoaxially or biaxially stretched, and from the viewpoint of cost and heat resistance, a stretched polyester resin is preferred.

The thickness of the substrate is generally 5 to 100 pm or so.

The form of the substrate is not limited to a film or a sheet, but may be any other form of a woven fabric or a non-woven fabric. The substrate may have a pressure-sensitive adhesive structure, or a multilayer structure. A method for producing a substrate of a multilayer structure is not specifically limited, and examples thereof include a coextrusion film method, a dry lamination method, a wet lamination method, a hot-melt lamination method, an extrusion lamination method, and a thermal lamination method.

These substrates may be previously subjected to various film processing treatments such as anchor coating, metal vapor deposition, corona discharge treatment or printing.

In extrusion-molding (extrusion-laminating) the elastomer resin composition of the present invention onto a substrate, preferably, the melt-extrusion temperature of the resin composition is appropriately controlled depending on the thermoplastic elastomer (A) and the polypropylene resin (B) to be used, and is generally 150 to 320°C, preferably 200 to 300°C. When the temperature is higher than 320°C, the moldability may worsen.

The extrusion lamination molding speed may exert a direct influence on productivity, and therefore, the composition is molded at 15 m/min or more, preferably at 30 m/min or more. Using the elastomer resin composition of the present invention, neck-in can be suppressed and high-speed molding is possible.

A melt film surface of the elastomer resin composition of the present invention can be ozone-treated for the purpose of introducing a polar group thereinto. Preferably, the ozone treatment is carried out at a rate of 0.01 to 1 g/m² relative to the surface area of the melt film.

The extrusion lamination is generally carried out on one surface of the substrate, but as needed, the extrusion lamination may be carried out on both surfaces thereof. The thickness of the formed pressure-sensitive adhesive film is generally 10 to 200 pm, more preferably 50 to 150 pm.

The laminate thus produced through extrusion lamination can be further processed into various films by metal vapor deposition, corona discharge treatment or printing.

The total thickness of the pressure-sensitive adhesive film of the present invention is preferably within a range of 10 to 700 pm, more preferably within a range of 50 to 500 pm, even more preferably within a range of 50 to 150 pm. When the thickness of the pressure-sensitive adhesive film is 50 pm or more, production is easy, and the film is excellent in impact resistance and in resistance to warping in heating. When the thickness of the pressure-sensitive adhesive film is 700 pm or less, stability in production and moldability can be good.

### [Film]

The film of the present invention has a decorative layer on one surface of the pressure-sensitive adhesive film of the present invention.

### <Decorative Layer>

For the decorative layer, a resin film, a nonwoven fabric, an artificial leather or a natural leather can be used. Above all, as the decorative layer, those having at least a layer of a resin film is especially preferred.

Examples of the resin to constitute the resin film include a polyolefin resin, a polystyrene resin, a polyvinyl chloride resin, an acrylonitrile-styrene resin, an acrylonitrile-butadiene-styrene resin, a polycarbonate resin, a (meth)acrylic resin, a polyester resin such as polyethylene terephthalate (PET) and polybutylene terephthalate; a polyamide such as nylon 6, nylon 66 and a polyamide elastomer; a polyvinyl chloride; a polyvinylidene chloride; a polyvinyl alcohol; an ethylene-vinyl alcohol copolymer; a polyacetal; a polyvinylidene fluoride; and a polyurethane. Above all, from the viewpoint of transparency, weather resistance, surface glossiness and scratch resistance, a (meth)acrylic resin is preferred. Though the thickness of the decorative layer is not specifically limited, the layer is preferably thin from the viewpoint of moldability and economic potential.

The (meth)acrylic resin may contain various additives, for example, an antioxidant, a heat stabilizer, a lubricant, a processing aid, an antistatic agent, a thermal degradation inhibitor, a UV absorbent, a light stabilizer, a polymer processing aid, a colorant, and an impact resistance improver.

A method for preparing the resin to be a raw material for the resin film is not specifically limited, and the resin may be prepared by any method capable of uniformly mixing the constituent components, but a method of mixing them by kneading in melt is preferred.

The decorative layer may be colored. The coloring method includes, though not specifically limited thereto, a method of incorporating a pigment or a dye into the resin itself to constitute a resin film to thereby color the resin itself before formed into a film; and a dyeing method of immersing a resin film in a dye dispersion to dye the film.

The decorative layer may be printed. By printing, the layer is given a pattern and a color of pictures, characters or graphics. The pattern may be colored, or may be uncolored. The printing may be given to the side that is in contact with the pressure-sensitive adhesive film of the present invention, for preventing the printing layer from fading.

The decorative layer may be vapor-deposited. For example, by indium vapor deposition, a metallic tone or gross may be given to the layer. The vapor deposition may be given to the side that is in contact with the pressure-sensitive adhesive film.

In the case where a (meth)acrylic resin film is used for the decorative layer, the surface hardness is, in terms of a JIS pencil hardness (thickness 75 pm), preferably HB or harder, more preferably F or harder, even more preferably H or harder. A (meth)acrylic resin film having a hard surface is hardly scratched, and therefore when it is used as a decorative layer, the resultant film is favorable as a decorative and protective film for the surface of molded articles that require elaborate design.

The decorative layer may be stretched. When stretched, the layer may have an increased mechanical strength and becomes hardly cracked. Not specifically limited, the stretching method incudes a simultaneous biaxial stretching method, a sequential biaxial stretching method, a tubular stretching method and a rolling method.

The decorative layer prepared as above may be laminated on the pressure-sensitive adhesive film by a lamination method.

### [Molded Article]

The molded article of the present invention is one having the pressure-sensitive adhesive film of the present invention or the film of the present invention (hereinafter also referred to as "decorative film") on the surface of an adherend. More preferably, the pressure-sensitive adhesive film of the present invention or the film of the present invention ("decorative film") is provided on the surface of an adherend formed of any other thermoplastic resin or thermosetting resin, a woody substrate or a non-woody fibrous substrate, or a metal.

The other thermoplastic resin for use as the adherend includes a polycarbonate resin, a polyethylene terephthalate resin, a polyamide resin, a polyethylene resin, a polypropylene resin, a polystyrene resin, a polyvinyl chloride resin, some other (meth)acrylic resin, and an ABS (acrylonitrile-butadiene-styrene copolymer) resin. The other thermosetting resin includes an epoxy resin, a phenol resin, and a melamine resin. The molded article may also be such that the pressure-sensitive adhesive film of the present invention or the film of the present invention (decorative film) is provided on the surface of an adherend of a woody substrate or a non-woody fibrous substrate such as kenaf.

A production method for the molded article is not specifically limited. For example, the pressure-sensitive adhesive film of the present invention or the film of the present invention (decorative film) is formed on the surface of an adherend of any other thermoplastic resin or thermosetting resin, or a woody substrate or a non-woody fibrous substrate, under heat by vacuum molding, pressure forming, vacuum pressure forming or compression molding to produce the molded article of the present invention.

Another preferred method for production of the molded article is a method that is generally called an injection molding in-mold lamination method.

The injection-molding in-mold lamination method is a method of inserting a pressure-sensitive adhesive film of the present invention or a film of the present invention (decorative film) between male and female dies of a mold of an injection-molding device, and then injecting a molten thermoplastic resin into the mold on the surface of the pressure-sensitive adhesive layer side of the film to thereby form an injection-molded article as an adherend simultaneously with laminating the pressure-sensitive adhesive film or the film (decorative film) on the surface of the injection-molded article.

The pressure-sensitive adhesive film or the film (decorative film) to be inserted into the mold may be a flat film as such, or may also be pre-molded by vacuum forming or pressure forming to have a concavo-convex shape.

Pre-molding of the pressure-sensitive adhesive film or the film (decorative film) may be carried out in different molding machines, or pre-molding may be carried out in a mold of an injection-molding machine for use in an injection-molding in-mold lamination method.

Exploiting the good stretchability and moldability and also excellent bipolar adhesiveness and surface smoothness of the pressure-sensitive adhesive film therein, the molded article provided with the pressure-sensitive adhesive film of the present invention or the film of the present invention (decorative film) on the surface of an adherend is applicable to articles that require elaborate design. For example, the molded article is favorably used for decoration of sign parts of advertisement towers, stand signboards, projecting signboards, transom signboards, and rooftop billboards; display parts of showcases, partitioning boards, and store displays; lighting components of fluorescent lamp covers, mood lighting covers, lampshades, ceiling lights, wall lights, and chandeliers; interior members of furniture, pendants, and mirrors; architectural parts of doors, domes, safety windows, partitions, stairway wainscots, balcony wainscots, and roofs of leisure buildings; transportation facilities-related parts such as interior and exterior parts of automobiles, and automobile exterior parts such as bumpers; parts of electronic instruments such as nameplates for audio and video appliances, stereo covers, vending machines, portable telephones, and personal computers; infant incubators, rulers, dial faces, greenhouses, large water tanks, box water tanks, bathroom parts, watch panels, bathtubs, sanitary units, desk mats, game parts, toys, and wallpapers; and marking films and various household electric appliances. The pressure-sensitive adhesive film of the repent invention has the above-mentioned characteristics and is therefore especially favorably used as a decorative film.

### Examples

Hereinunder the present invention is described in more detail with reference to Examples, but the present invention is not whatsoever restricted by these Examples. The components used in Examples and Comparative Examples are as mentioned below.

### <Production Example 1> [Synthesis of Thermoplastic Elastomer (A-1)]

A pressure-resistant container was previously purged with nitrogen and dried. 50.0 kg of a solvent cyclohexane, 94.1 g of a 10.5 mass% cyclohexane solution of sec-butyl lithium (sec-butyl lithium 9.9 gram-equivalent) as an anionic polymerization initiator, and 300 g of a Lewis base tetrahydrofuran were put into the pressure-resistant container. The resultant solution was heated up to 50°C. 1.25 kg of styrene (1) was added to the solution, and then polymerized for 1 hour. Subsequently, 10.00 kg of isoprene was added to the solution, and polymerized for 2 hours. 1.25 g of styrene (2) was added to the solution, and then polymerized for 1 hour. Thus, a reaction liquid containing a styrene-isoprene-styrene triblock copolymer was produced.

A hydrogenation catalyst palladium carbon was added to the reaction liquid in an amount of 5% by mass relative to 100% by mass of the block copolymer. The supported amount of palladium was 5% by mass relative to 100% by mass of palladium carbon. In an environment at a hydrogen pressure of 2 MPa and at 150°C, the reaction was carried out for 10 hours. The reaction liquid was left cooled, and then the pressure was discharged. Subsequently, palladium carbon was removed from the reaction liquid by filtration, then the filtrate was concentrated, and the concentrate was dried in vacuum to give a hydrogenated styrene-isoprene-styrene triblock copolymer, block copolymer (A-1). The proportion of the total of the 1,2-bond amount and the 3,4-bond amount relative to the total bond amount in the polyisoprene block was 55 mol%.

### <Production Example 2> [Synthesis of Thermoplastic Elastomer (A-2)]

50.0 kg of a solvent cyclohexane, and 61.1 g of a 10.5 mass% cyclohexane solution of sec-butyl lithium (sec-butyl lithium 6.42 g) as an anionic polymerization initiator were put into a nitrogen-purged and dried pressure-resistant container, then heated up to 50°C. 0.81 kg of styrene (1) was added thereto, and polymerized for 1 hour. Subsequently, 10.87 kg of isoprene was added and polymerized for 2 hours. Further, 0.81 g of styrene (2) was added and polymerized for 1 hour to give a reaction liquid containing a styrene-isoprene-styrene triblock copolymer.

A hydrogenation catalyst palladium carbon (palladium supported amount; 5% by mass) was added to the reaction liquid in an amount of 5% by mass relative to the block copolymer, and reacted for 10 hours under the condition of a hydrogen pressure of 2 MPa and 150°C.

After left cooled and pressure-discharged, palladium carbon was removed by filtration, then the filtrate was concentrated and further dried in vacuum to give a hydrogenated styrene-isoprene-styrene triblock copolymer (A-2-1). The proportion of the total of the 1,2-bond amount and the 3,4-bond amount relative to the total bond amount in the polyisoprene block was 7 mol%.

According to the same process as that for producing the hydrogenate (A-2-1), 50.0 kg of a solvent cyclohexane, and 420.0 g of a 10.5 mass% cyclohexane solution of sec-butyl lithium (sec-butyl lithium 44.1 g) as an anionic polymerization initiator were put into a nitrogen-purged and dried pressure-resistant container, and heated up to 50°C. Then, 2.83 kg of styrene (1) was added thereto, and polymerized for 1 hour, and subsequently 19.81 kg of isoprene was added and polymerized for 2 hours to give a reaction liquid containing a styrene-isoprene diblock copolymer.

The reaction liquid was hydrogenated in the same manner as above to give a hydrogenated styrene-isoprene diblock copolymer (A-2-2).

Using a twin-screw extruder ZSK26 Mega Compounder (L/D = 54) by Coperion GmbH, the resultant (A-2-1) and (A-2-2) were melt-kneaded at a screw speed of 300 rpm and at a kneading temperature 200°C to give a styrene-based thermoplastic elastomer composition (A-2).

### <Production Example 3> [Synthesis of Thermoplastic Elastomer (A-3)]

(1) 4.29 kg of α-methylstyrene, 6.25 kg of cyclohexane, 1.18 kg of methylcyclohexane and 0.15 kg of tetrahydrofuran were put into a nitrogen-purged, stirrer-equipped pressure-resistant container. 0.42 L of sec-butyl lithium (1.3 M cyclohexane solution) was added to the mixture, and polymerized at -10°C for 5 hours. In 3 hours after the start of the polymerization, the weight-average molecular weight of the poly-α-methylstyrene (block S) was measured by GPC, and was 6600 in terms of polystyrene, and the polymerization conversion of α-methylstyrene was 90%. Next, 0.88 kg of butadiene was added to the reaction mixture, and stirred at -10°C for 30 minutes for polymerization to form a block t1, and thereafter 41.8 kg of cyclohexane was added. At that time, the polymerization conversion of α-methylstyrene was 90%, the weight-average molecular weight of the polybutadiene block (t1) (measured by GPC, in terms of polystyrene) was 3700, and the 1,2-bond amount determined by ¹H-NMR measurement was 81 mol%.
   Next, 7.71 kg of butadiene was further added to the reaction liquid, and polymerized at 50°C for 2 hours. At that time, the weight-average molecular weight of the polybutadiene block (t2) of the block copolymer (structure: S-t1-t2), as sampled, was 29800 (measured by GPC, in terms of polystyrene), and the 1,2-bond amount determined by ¹H-NMR measurement was 40 mol%.
(2) Subsequently, 0.54 L of dichlorodimethylsilane (0.5 M toluene solution) was added to the polymerization reaction solution, and stirred at 50°C for 1 hour to give a poly(α-methylstyrene)-polybutadiene-poly(α-methylstyrene) triblock copolymer. The coupling efficiency at that time was calculated from the UV absorption area ratio in GPC of the coupled product (poly(α-methylstyrene)-polybutadiene-poly(α-methylstyrene) triblock copolymer: S-t1-t2-X-t2-t1-S) and the unreacted block copolymer (poly(α-methylstyrene)-polybutadiene block copolymer: S-t1-t2), and was 94%. As a result of ¹H-NMR measurement, the α-methylstyrene polymer block content in the poly(α-methylstyrene)-polybutadiene-poly(α-methylstyrene) triblock copolymer was 31% by mass, and the 1,4-bond amount in the entire butadiene polymer block T (that is, block t1 and block t2) was 55 mol%.
(3) In a hydrogen atmosphere, a Ziegler-Natta hydrogenation catalyst formed from nickel octylate and triethyl aluminum was added to the polymerization reaction solution obtained in the above (2), which was thus hydrogenated at a hydrogen pressure of 0.8 MPa and at 80°C for 5 hours to give a hydrogenated poly(α-methylstyrene)-polybutadiene-poly(α-methylstyrene) triblock copolymer (hereinafter this is abbreviated as block copolymer 1). GPC measurement of the resultant block copolymer 1 verified that the main component of the copolymer is a hydrogenated poly(α-methylstyrene)-polybutadiene-poly(α-methylstyrene) triblock copolymer (coupled product) having Mt (peak top of average molecular weight) of 81000, Mn (number-average molecular weight) of 78700, Mw (weight-average molecular weight) of 79500 and Mw/Mn of 1.01. From the UV (254 nm) absorption area ratio in GPC, the coupled product was contained in an amount of 94%. By ¹H-NMR measurement, the hydrogenation ratio of the butadiene block B composed of the block t1 and the block t2 was 97.5%. In the manner as above, a thermoplastic elastomer (A-3) was produced.

### [Polypropylene Polymer (B-1)]

As a polypropylene polymer (B-1), Waymax^{™} (registered trademark) MFX8 (having MFR at 230°C and 21.18 N of 1.1 g/10 min, and an elongation viscosity ratio η2.5/η1.0 of 6.0) by Japan Polypropylene Corporation was used.

### [Polypropylene Polymer (B-2)]

As a polypropylene polymer (B-2), Waymax^{™} (registered trademark) MFX3 (having MFR at 230°C and 21.18 N of 9.0 g/10 min, and an elongation viscosity ratio η2.5/η1.0 of 5.4) by Japan Polypropylene Corporation was used.

### [Polypropylene Polymer (B-3)]

As a polypropylene polymer (B-3), WINTEC^{™} (registered trademark) WFX4TA (having MFR at 230°C and 21.18 N of 7.0 g/10 min, and an elongation viscosity ratio η2.5/η1.0 of 0.9) by Japan Polypropylene Corporation was used.

### [Polypropylene Polymer (B-4)]

As a polypropylene polymer (B-4), Novatec^{™} (registered trademark) EA9 (having MFR at 230°C and 21.18 N of 0.5 g/10 min, and an elongation viscosity ratio η2.5/η1.0 of 1.3) by Japan Polypropylene Corporation was used.

### [Polypropylene Polymer (B-5)]

As a polypropylene polymer (B-5), Primepolypro^{™} (registered trademark) J229E (having MFR at 230°C of 50.0 g/10 min, and an elongation viscosity ratio η2.5/η1.0 of 0.6) by Prime Polymer Corporation was used.

### [Polypropylene Polymer (C-1)]

As a polar group-containing polypropylene polymer (C-1), Umex^{™} (registered trademark) 5500 by Sanyo Chemical Industries, Ltd. was used.

### [Measurement Method for Elongation Viscosity, Calculation Method for Elongation Viscosity Ratio]

Regarding the measurement method for an elongation viscosity ratio, principally the same value is obtained under any condition in monoaxial elongation viscosity measurement, and for example, a known document Polymer 42 (2001)8663 describes details of measurement method and measurement apparatus. In measuring the polypropylene polymer in the present invention, the following measurement method and measuring apparatus were used.
Apparatus: DHR-2 by TA Instruments Inc.
Tool: SER2 Extensional
Measurement temperature: 180°C
Strain rate: 1.0 sec⁻¹

The elongation viscosities measured under the above-mentioned condition at strain amounts of 1.0 and 2.5 are referred to as η1.0 and η2.5, respectively, and the elongation viscosity ratio is represented by η2.5/η1.0

### [Elastomer Resin Composition]

The raw materials shown in Table 1 were melt-kneaded in the mass ratio (part by mass) shown in Table 1, using a twin-screw extruder at 230°C and at a screw rotation speed of 200 rpm, and then extruded as strands, pelletized them to give pellets of an elastomer resin composition. The formulation of the elastomer resin composition, the adhesion strength (PP) of each composition and the adhesion strength (PC/ABS) thereof measured by the method described below, and the neck-in ratio in forming films are shown therein.

**Table 1**

| | | | Example | | | | | | | Comparative Example | | | | |
|---|---|---|---|---|---|---|---|---|---|---|---|---|---|---|
| | | | 1 | 2 | 3 | 4 | 5 | 6 | 7 | 1 | 2 | 3 | 4 | 5 |
| Constituent Component (part by mass) | Thermoplastic Elastomer | (A-1) | 100 | 100 | 100 | 100 | 40 | - | 100 | 100 | 100 | 100 | 100 | 100 |
| | | (A-2) | - | - | - | - | 40 | 100 | - | - | - | - | - | - |
| | | (A-3) | - | - | - | - | 20 | - | - | - | - | - | - | |
| | Polypropylene Polymer | (B-1) | 5 | 15 | 10 | 10 | 7.5 | 10 | - | 3 | 25 | - | - | - |
| | | (B-2) | - | - | - | - | - | - | 10 | - | - | - | - | - |
| | | (B-3) | - | - | - | - | - | - | - | - | - | 15 | - | - |
| | | (B-4) | - | - | - | - | - | - | - | - | - | - | 15 | - |
| | | (B-5) | - | - | - | - | - | - | - | - | - | - | - | 15 |
| | | (C-1) | - | - | 10 | 20 | 10 | 10 | - | - | - | - | - | - |
| Adhesion Strength | PP | | good | good | good | good | good | good | good | good | good | good | good | good |
| | PC/ABS | | 46 | 49 | 43 | 46 | 42 | 40 | 52 | 45 | 7 | 49 | 59 | 54 |
| Film Formability (extrudability) | Neck-in Ratio (%) | | 40 | 30 | 33 | 33 | 40 | 37 | 40 | 53 | 27 | 47 | 50 | 50 |

The neck-in ratio and the adhesion strength of the elastomer resin compositions shown in Table 1 were evaluated as follows.

### [Neck-in Ratio] (Evaluation of extrudability)

The neck-in ratio of the elastomer resin composition shown in Table 1 is defined as follows. Specifically, using a molding machine including a twin-screw extruder with a T-die, in which the kneading and die-preset temperature of the T-die was 230°C and the lip width thereof was 150 mm, the elastomer resin composition was formed into a film under the condition of a lip aperture of 0.5 mm and an air gap of 5 cm. The neck-in ratio is represented by (L0 - L1)/L0 × 100, in which L0 means a lip width and L1 means a width of the formed film.

### [Adhesion strength (PP) of elastomer resin composition] (Evaluation of adhesiveness to apolar material)

Using a compression-molding machine, pellets of the elastomer resin composition shown in Table 1 were compression-molded for 2 minutes under the condition of 200°C and 50 kgf/cm² (4.9 MPa) to give a sheet of the elastomer resin composition. The sheet of the elastomer resin composition of 150 × 150 mm (length 150 mm × width 150 mm × thickness 0.5 mm), a polyimide film (Kapton Film by Toray DuPont Corporation, length 75 mm × width 150 mm × thickness 0.05 mm), and a polypropylene sheet (MA3 by Japan Polypropylene Corporation, length 150 mm × width 150 mm × thickness 0.4 mm) were layered in that order, and put at the center part of a metal spacer having an inside dimension of 150 mm × 150 mm and a thickness of 0.8 mm. The layered sheets and the metal spacer were sandwiched between polytetrafluoroethylene sheets, and further sandwiched between metal plates from the outside. Using a compression-molding machine, this was, after pre-heated at 150°C and 0 kgf/cm² (0 MPa) for 5 minutes, compression-molded for 5 seconds under 50 kgf/cm² (4.9 MPa) to give a multilayer film of a composition to form an impact-absorbing layer and polypropylene.

The multilayer film was cut into a width of 25 mm to be a test piece for adhesion strength measurement. The peel strength between the elastomer resin composition and polypropylene was measured, using a peel tester (AGS-X by Shimadzu Corporation) according to JIS K 6854-2 under the condition of a peel angle of 180, a tensile speed of 100 mm/min and an ambient temperature of 23°C. The measured peel strength is referred to as an adhesion strength (PP) of the composition.

### [Adhesion strength (PC/ABS) of composition to form pressure-sensitive adhesive film] (Evaluation of adhesiveness to polar material)

A peel strength measured according to the same process as in the above-mentioned [Adhesion strength (PP) of elastomer resin composition], except that a sheet of PC/ABS (Novalloy S1500 by Daicel Polymer Ltd.) (length 150 mm × width 150 mm × thickness 0.4 mm) was used in place of the polypropylene sheet, is referred to as an adhesion strength (PC/ABS) of the composition.

### [Evaluation of Adhesion Strength]

Regarding the adhesion strength obtained according to the above-mentioned method, the samples in which the adherend was fractured (material fracture) during measurement were evaluated to be "good", and the others were expressed as a numerical value (N/25 mm) of the peel strength thereof.

All Examples gave good results in point of the adhesion strength and the neck-in ratio. Comparative Example 1, in which the content of the polypropylene polymer (B-1) having an elongation viscosity ratio η2.5/η1.0 of 6.0 was small, had large neck-in; and Comparative Example 2, in which the content of the polypropylene polymer (B-1) was large, was poor in adhesiveness to PC/ABS. Comparative Examples 3 to 5, in which the polypropylene polymer used had an elongation viscosity ratio η2.5/η1.0 of less than 5.0, had large neck-in and were poor in extrudability.

From Examples 1 and 2 and Comparative Examples 1 and 2, it is known that the neck-in ratio tends to lower with the increase in the amount of the polypropylene polymer (B-1), but the adhesion strength rapidly lowers when the amount of the polypropylene polymer (B-1) is 25 parts by mass.

## Claims

1. An elastomer resin composition comprising a thermoplastic elastomer (A), which is a block copolymer having a polymer block (a1) containing a structural unit derived from an aromatic vinyl compound and a polymer block (a2) containing a structural unit derived from a conjugated diene compound, or a hydrogenate of the block copolymer, and a polypropylene polymer (B), which has the elongation viscosity ratio η2.5/η1.0 being 5.0 or more, where each of η1.0, and η2.5 represents the elongation viscosity at a strain of 1.0 and 2.5, respectively, measured in uniaxial elongation viscosity measurement under the condition of a strain rate of 1.0 sec⁻¹ and a measurement temperature of 180°C,
wherein the content of the polypropylene polymer (B) is 5 to 15 parts by mass relative to 100 parts by mass of the thermoplastic elastomer (A),
wherein the elongation viscosity at a strain of 1.0 and 2.5 is measured according to the method disclosed in the description.

2. The elastomer resin composition according to claim 1, wherein a total of the 1,2-bond amount and the 3,4-bond amount of the polymer block (a2) containing a structural unit derived from a conjugated diene compound in the thermoplastic elastomer (A) is 40 mol% or more.

3. The elastomer resin composition according to claim 1 or 2, wherein MFR (230°C, 21.18 N) of the polypropylene polymer (B) is 0.1 g/10 min or more and 10 g/10 min or less.

4. The elastomer resin composition according to any one of claims 1 to 3, which contains a polypropylene polymer (C) differing from the polypropylene polymer (B) in an amount of 0 to 20 parts by mass relative to 100 parts by mass of the total of the thermoplastic elastomer (A) and the polypropylene polymer (B).

5. The elastomer resin composition according to claim 4, wherein a part or all of the polypropylene polymer (C) is a polar group-containing polypropylene polymer.

6. A pressure-sensitive adhesive film having a layer of the elastomer resin composition of any one of claims 1 to 5.

7. A film having a decorative layer on one surface of the pressure-sensitive adhesive film of claim 6.

8. A method for producing a pressure-sensitive adhesive film of claim 6, comprising extrusion-molding the elastomer resin composition of any one of claims 1 to 5.

9. A molded article having the film of claim 6 or 7, and an adherend.

## Patentansprüche

1. Elastomerharzzusammensetzung, umfassend ein thermoplastisches Elastomer (A), das ein Blockcopolymer mit einem Polymerblock (a1), der eine von einer aromatischen Vinylverbindung abgeleitete Struktureinheit enthält, und einem Polymerblock (a2), der eine von einer konjugierten Dienverbindung abgeleitete Struktureinheit enthält, oder ein Hydrogenat des Blockcopolymers ist, und ein Polypropylenpolymer (B), das ein Dehnungsviskositätsverhältnis η2,5/η1,0 von 5,0 oder mehr aufweist, wobei η1,0 und η2,5 jeweils die Dehnungsviskosität bei einer Dehnung von 1,0 bzw. 2,5 darstellt, gemessen in uniaxialer Dehnungsviskositätsmessung unter der Bedingung einer Dehnungsrate von 1,0 s⁻¹ und einer Messtemperatur von 180°C,
wobei der Gehalt des Polypropylenpolymers (B) 5 bis 15 Massenanteile, relativ zu 100 Massenanteilen des thermoplastischen Elastomers (A), beträgt,
wobei die Dehnungsviskosität bei einer Dehnung von 1,0 und 2,5 gemäß dem in der Beschreibung offenbarten Verfahren gemessen wird.

2. Elastomerharzzusammensetzung nach Anspruch 1, wobei die Gesamtmenge des 1,2-Bindungsanteils und des 3,4-Bindungsanteils des Polymerblocks (a2), der eine von einer konjugierten Dienverbindung abgeleitete Struktureinheit enthält, in dem thermoplastischen Elastomer (A) 40 Mol% oder mehr beträgt.

3. Elastomerharzzusammensetzung nach Anspruch 1 oder 2, wobei MFR (230°C, 21,18 N) des Polypropylenpolymers (B) 0,1 g/10 min oder mehr und 10 g/10 min oder weniger beträgt.

4. Elastomerharzzusammensetzung nach einem der Ansprüche 1 bis 3, die ein Polypropylenpolymer (C), unterschiedlich von dem Polypropylenpolymer (B), in einer Menge von 0 bis 20 Massenanteilen, relativ zu 100 Massenanteilen der Gesamtmenge des thermoplastischen Elastomers (A) und des Polypropylenpolymers (B), enthält.

5. Elastomerharzzusammensetzung nach Anspruch 4, wobei ein Teil oder das gesamte Polypropylenpolymer (C) ein polare Gruppen enthaltendes Polypropylenpolymer ist.

6. Eine druckempfindliche Haftmittelfolie mit einer Schicht der Elastomerharzzusammensetzung nach einem der Ansprüche 1 bis 5.

7. Folie mit einer dekorativen Schicht auf einer Oberfläche der druckempfindlichen Haftmittelfolie nach Anspruch 6.

8. Verfahren zur Herstellung einer druckempfindlichen Haftmittelfolie nach Anspruch 6, umfassend das Extrusionsformen der Elastomerharzzusammensetzung nach einem der Ansprüche 1 bis 5.

9. Formkörper mit der Folie nach Anspruch 6 oder 7 und einem Fügeteil.

## Revendications

1. Composition de résine élastomère comprenant un élastomère thermoplastique (A), qui est un copolymère à blocs ayant un bloc polymère (a1) contenant une unité structurelle dérivée d'un composé de vinyle aromatique et un bloc polymère (a2) contenant une unité structurelle dérivée d'un composé de diène conjugué, ou un hydrogénat du copolymère à blocs, et un polymère de polypropylène (B), qui a le rapport de viscosités à l'allongement η2,5 /η1,0 qui est de 5,0 ou plus, où chacun de η1,0 et η2,5 représente la viscosité à l'allongement à une déformation de 1,0 et 2,5, respectivement, mesurée dans une mesure de viscosité à l'allongement uniaxial à la condition d'un taux de déformation de 1,0 s⁻¹ et d'une température de mesure de 180 °C,
dans laquelle la teneur en le polymère de polypropylène (B) est de 5 à 15 parties en masse par rapport à 100 parties en masse de l'élastomère thermoplastique (A),
dans laquelle la viscosité à l'allongement à une déformation de 1,0 et 2,5 est mesurée conformément au procédé divulgué dans la description.

2. Composition de résine élastomère selon la revendication 1, dans laquelle un total de la quantité en liaison 1,2 et la quantité en liaison 3,4 du bloc polymère (a2) contenant une unité structurelle dérivée d'un composé de diène conjugué dans l'élastomère thermoplastique (A) est de 40 % en mole ou plus.

3. Composition de résine élastomère selon la revendication 1 ou 2, dans laquelle l'indice de fluidité (230 °C, 21,18 N) du polymère de polypropylène (B) est de 0,1 g/10 min ou plus et 10 g/10 min ou moins.

4. Composition de résine élastomère selon l'une quelconque des revendications 1 à 3, qui contient un polymère de polypropylène (C) différant du polymère de polypropylène (B) en une quantité de 0 à 20 parties en masse par rapport à 100 parties en masse du total de l'élastomère thermoplastique (A) et du polymère de polypropylène (B).

5. Composition de résine élastomère selon la revendication 4, dans laquelle une partie ou l'ensemble du polymère de polypropylène (C) est un polymère de polypropylène contenant un groupe polaire.

6. Film adhésif sensible à la pression ayant une couche de la composition de résine élastomère selon l'une quelconque des revendications 1 à 5.

7. Film ayant une couche décorative sur une surface du film adhésif sensible à la pression selon la revendication 6.

8. Procédé de production d'un film adhésif sensible à la pression selon la revendication 6, comprenant mouler par extrusion la composition de résine élastomère selon l'une quelconque des revendications 1 à 5.

9. Article moulé ayant le film selon la revendication 6 ou 7 et un adhéré.
